(19) **Europäisches Patentamt / European Patent Office / Office européen des brevets**

(11) **EP 2 199 456 B1**

(12) **EUROPEAN PATENT SPECIFICATION**

(45) Date of publication and mention
of the grant of the patent:
**16.01.2019 Bulletin 2019/03**

(51) Int Cl.:
*D06M 13/322* (2006.01)    *D06M 101/32* (2006.01)
*D01F 6/62* (2006.01)    *D06M 13/352* (2006.01)
*D06M 13/11* (2006.01)    *D06M 13/432* (2006.01)
*C08K 5/29* (2006.01)    *D01F 11/06* (2006.01)

(21) Application number: **08834437.9**

(22) Date of filing: **25.09.2008**

(86) International application number:
**PCT/JP2008/067322**

(87) International publication number:
**WO 2009/041518 (02.04.2009 Gazette 2009/14)**

(54) **POLYESTER FIBER, PROCESS FOR PRODUCING THE SAME, AND TEXTILE STRUCTURE EMPLOYING THE SAME**

POLYESTERFASER, HERSTELLUNGSVERFAHREN DAFÜR UND TEXTILSTRUKTUR DAMIT

FIBRE POLYESTER, SON PROCÉDÉ DE PRODUCTION, ET STRUCTURE TEXTILE L'UTILISANT

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **26.09.2007 JP 2007248766**

(43) Date of publication of application:
**23.06.2010 Bulletin 2010/25**

(73) Proprietor: **Toray Industries, Inc.**
**Tokyo, 103-8666 (JP)**

(72) Inventors:
• **SHIMIZU, Takeo**
**Otsu-shi**
**Shiga 520-2141 (JP)**
• **TABEYA, Toshihiro**
**Otsu-shi**
**Shiga 520-8558 (JP)**
• **SEKI, Masao**
**Otsu-shi**
**Shiga 520-2141 (JP)**

• **TAKEDA, Keiji**
**Otsu-shi**
**Shiga 520-2141 (JP)**

(74) Representative: **Webster, Jeremy Mark et al**
**Mewburn Ellis LLP**
**City Tower**
**40 Basinghall Street**
**London EC2V 5DE (GB)**

(56) References cited:
EP-A1- 1 564 316    JP-A- 9 195 182
JP-A- 11 050 379    JP-A- 63 152 466
JP-A- 2000 226 766    JP-A- 2001 271 250
JP-A- 2004 324 008    US-A- 3 867 181

• DATABASE WPI Week 200203 Thomson Scientific, London, GB; AN 2002-021172 XP002687549, & JP 2001 261797 A (TORAY IND INC) 26 September 2001 (2001-09-26)
• DATABASE WPI Week 200236 Thomson Scientific, London, GB; AN 2002-322835 XP002687550, & JP 2002 030208 A (TORAY IND INC) 31 January 2002 (2002-01-31)

**Description**

[Technical field]

The present invention relates to polyester-based fibers excellent in hydrolysis resistance, a production method thereof, and a fiber structure using the same.

[Background art]

In recent years, the perception of environment as being more important reveals the problem of plastic waste, and biodegradable plastics likely to be degraded by enzymes and microbes attract attention. Further, in view of global warming, it is important to inhibit the emission of carbon dioxide into the atmosphere, and as expressed by the concept of carbon neutrality, it is recommended to use materials formed of natural resources. In view of the abovementioned problems, especially polylactic acid as a non-petroleum raw material is highlighted. Polylactic acid has a nature that it is very highly hydrolyzable in water of room temperature and high temperature and can also be degraded even by the water in air. This problem is not only of polylactic acid fibers but also common to polyester-based fibers, and is promoted since the protons discharged from the terminal carboxyl groups act as an autocatalyst for hydrolyzing the ester. Thus, since these fibers remarkably decline in strength owing to the degradation in the presence of hot water and in high-temperature and high-humidity conditions, their use has been restricted.

As fibers for clothing, not fiber structures respectively consisting of single type of fibers, but fiber structures respectively consisting of multiple types of fibers have been suitably used. For example, since highly water absorbable fibers typified by cotton and rayon can absorb sweat well, they can be comfortably worn in the season with a high average air temperature when perspiration is active or for such activities as performing sweat-generating exercise. On the other hand, these fibers have such disadvantages that the absorbed sweat makes the wearer feel heavy and that the fibers are unlikely to be dried. In this case, if a fiber structure consisting of highly water absorbable fibers and slightly water absorbable fibers in combination is worn as clothing, the clothing worn can remain light even if it absorbs sweat and the clothing washed can be dried fast, since excessive water absorption can be inhibited. Further, highly water absorbable fibers are generally likely to be creased, but if they are combined with slightly water soluble fibers unlikely to be creased, the closing formed with these fibers combined has a feature of being unlikely to be creased in addition to the abovementioned features, and therefore can be very comfortably worn. As explained here, a fiber structure consisting of multiple types of fibers in combination can reduce the disadvantages of each type of fibers used alone.

However, it is inevitable that most types of fibers for clothing are treated with hot water and alkalis in the dyeing process . For cellulose-based fibers typified by cotton, rayon, polynosics, solvent-spun rayon, etc., alkalis are used in various steps such as desizing, scouring, bleaching, mercerization, dyeing and reduction clearing, but alkalis promote the hydrolysis of polyester-based fibers. Therefore, in the case where a fiber structure consisting of the abovementioned polyester-based fibers and other fibers is dyed, the polyester-based fibers are hydrolyzed to lower the tenacity of the fibers as a whole, not allowing the fiber structure to be widely used.

As methods for solving the problem, JP 2001-261797 A and JP 2002-30208 A disclose methods for lowering the terminal carboxyl group concentration by adding a terminal blocking agent. However, these methods have a problem that since the terminal blocking agent is added to and kneaded with polymer chips before spinning, the terminal blocking agent causes fuming due to evaporation and decomposition, to generate an offensive odor and toxic gas. There is also another problem that since the terminal blocking agent is lost due to decomposition, it must be added by an excessive amount. Further, the additional component added to a molten polymer lowers spinnability, to affect productivity. Moreover, it has a further other disadvantage that since the production made at a time is large it is difficult to control the amount of the chemical substance.

A composite fiber structure consisting polyester-based fibers blocked at the terminals and other fibers is also disclosed in JP 2005-226183. However, the abovementioned problem of production is not solved. In addition, though biodegradable fibers are expected to be hydrolyzed in the nature after having been dumped, to allow recycling, the fibers that are controlled in hydrolyzability by the abovementioned method have a disadvantage that the hydrolysis in the nature is slow even though the decline of tenacity during wearing as clothing can be inhibited. After the clothing fibers and industrial fibers have come to the ends of their lives, they must be quickly hydrolyzed in the nature, but fibers are used in various applications, and the required lives are different from application to application. Furthermore, dyeing processes are variously different from application to application, and in the case where the abovementioned method is employed, yarns must be produced under various conditions for achieving the hydrolysis resistance levels suitable for various applications and various dyeing processes, to raise the production cost, making the use of the abovementioned method economically very difficult. JP 11-80522 A refers to higher hydrolysis resistance and adjustability of biodegradation rate, but economically reasonable production is very difficult as in JP 2005-226183 A. US 3867181 also concerns polyester yarn having a carbodiimide coating. [Patent Document 1] JP 2001-261797 A, [Patent Document 2] JP 2002-30208 A, [Patent Document 3] JP 2005-226183 A, [Patent Document 4] JP 11-80522 A.

This invention provides polyester-based fibers excellent in hydrolysis resistance by treating the fibers using a terminal blocking agent after spinning, a production method thereof, and a fiber structure using the same.

Accordingly, in a first aspect the invention provides polyester-based fibers as defined in the accompanying claim 1. In a second aspect the invention provides a fiber structure comprising cellulose-based fibers together with the polyester-based fibers according to the first aspect. A third aspect of the invention provides a method for producing polyester-based fibers as defined in the accompanying claims.

This invention has the following configuration for achieving the abovementioned object.

(1) Polyester-based fibers comprising a terminal blocking agent taken up inside the fibers, to block the terminal carboxyl groups. The terminal blocking agent is at least one compound selected from carbodiimide compounds, oxazoline compounds and epoxy compounds.

In the polyester-based fibers, the terminal blocking agent concentration becomes smaller from the outer layer toward the inner layer of said fibers . Thus, if the outer layer fiber portion obtained by removing the solvent from the solution that has 5 to 10 wt% of the outer layer portion of said fibers dissolved in said solvent is N1 and the inner layer fiber portion remaining after hydrolyzing and removing the outer layer fiber portion is N2, then the concentration of the terminal blocking agent contained in N1 is larger than the concentration of the terminal blocking agent contained in N2.

(2) Polyester-based fibers, according to the abovementioned (1), wherein said polyester-based fibers contain polylactic acid as a main component.

(3) Polyester-based fibers, according to the abovementioned (1), wherein said polyester-based fibers contain an aromatic polyester as a main component. In polyester-based fibers according to the abovementioned (1), said polyester-based fibers may contain at least one of terephthalic acid and succinic acid as a dicarboxylic acid.

(4) A fiber structure comprising cellulose-based fibers together with the polyester-based fibers as set forth in the abovementioned (1) .

(5) A method for producing polyester-based fibers comprising the step of causing a terminal blocking agent to be taken up inside the fibers, for blocking the terminal carboxyl groups.

In the method, the polyester-based fibers are supplied into the treatment solution containing the terminal blocking agent at 80 to 130°C at normal pressure or under pressurization and processed in the bath while said treatment solution is circulated.

The terminal blocking agent is at least one compound selected from carbodiimide compounds, oxazoline compounds and epoxy compounds. The particle size of the terminal blocking agent is 100pm or less.

(6) A method for producing polyester-based fibers, according to the above mentioned (5), wherein a treatment solution containing the terminal blocking agent is given to the polyester-based fibers, followed by drying and heat treatment.

(7) A method for producing polyester-based fibers, according to the abovementioned (5) or (6), wherein said polyester-based fibers contain polylactic acid as a main component. (8) A method for producing polyester-based fibers, according to the abovementioned (5) or(6), wherein said polyester-based fibers contain at least one of terephthalic acid and succinic acid as a dicarboxylic acid.

(9) A method for producing polyester-based fibers comprising the step of causing a terminal blocking agent to be taken up inside the polyester-based fibers that already contain a terminal blocking agent beforehand.

(10) A method for producing polyester-based fibers, according to the abovementioned (9), wherein the polyester-based fibers are formed of an aliphatic polyester.

(11) A method for producing polyester-based fibers, according to the abovementioned (9), wherein the polyester-based fibers are formed of an aromatic polyester.

(12) Polyester-based fibers produced by the method as set forth in any one of the abovementioned (9) through (11).

[Effect of the invention]

This invention can let a fiber structure containing polyester-based fibers have high hydrolysis resistance.

[The best modes for carrying out the invention]

For this invention, the enhancement of hydrolysis resistance of polyester-based fibers was intensively studied, and as a result, it was found that if the method of letting said fibers take up a terminal blocking agent is employed, hydrolysis resistance can be greatly enhanced.

If said fibers are made to take up a terminal blocking agent, the terminal blocking agent reacts with the terminal carboxyl groups in the polymer, to lower the concentration of the terminal carboxyl groups. Therefore, the fibers can have hydrolysis resistance.

When said fibers are made to take up a terminal blocking agent, the terminal blocking agent diffuses from outside the fibers. Therefore, there occurs a difference between the terminal blocking agent concentration in the outer layer portion of the fibers and the terminal blocking agent concentration in the inner layer, and the concentration of the terminal blocking agent contained in the outer layer portion becomes larger.

Further, in this invention, it was found that in the case where the polyester-based fibers are treated in a bath containing the terminal blocking agent as fine particles, if the particle size of the terminal blocking agent is small, the terminal blocking agent can be efficiently absorbed inside the fibers. A particle size of 100 micrometers or less is used, and a particle size of 50 micrometers or less can be more preferably used.

In this invention, as the polyester-based fibers, an aliphatic polyester or aromatic polyester can be preferably used.

The aliphatic polyester is a polymer selected from poly(D-lactic acid), poly(L-lactic acid), copolymer consisting of D-lactic acid and L-lactic acid, copolymer consisting of D-lactic acid and a hydroxycarboxylic acid, copolymer consisting of L-lactic acid and a hydroxycarboxylic acid and copolymer consisting of DL-lactic acid and a hydroxycarboxylic acid, or a blend consisting of the foregoing, etc. Above all, in view of general applicability, polylactic acid containing L-lactic acid as a main component can be preferably used. Containing L-lactic acid as a main component means that the aliphatic polyester contains 50 wt% or more of L-lactic acid. Further, a terminal blocking agent can also be added to the aliphatic polyester at the time of spinning, so that some of the terminal carboxyl groups can be blocked.

Known methods for producing such polylactic acid include a two-step lactide method of once producing a lactide as a cyclic dimer with lactic acid as a raw material and subsequently performing ring-opening polymerization and a one-step direct polymerization method of performing direct dehydration condensation in a solvent with lactic acid as a raw material. The polylactic acid used in this invention can be obtained by any method.

Examples of the aromatic polyester include polyethylene terephthalate, polytrimethylene terephthalate, polybutylene terephthalate, etc. Any of these aromatic polyesters may also contain at least one of terephthalic acid and succinic acid as a dicarboxylic acid. Further, it may also contain adipic acid.

The polyester-based fibers used in this invention can be ordinary flat yarns or also filament yarns such as false twisted yarns, strong twisted yarns, Taslan yarns, irregularly thick and fine yarns and mixed yarns, and also fibers of various modes such as staple fibers, tow and spun yarns.

The polyester-based fibers used in this invention can also form an alloy with another polymer such as a polyamide.

The polyester-based fibers of this invention can also be used as fibers mixed with other fibers. The other fibers that can be mixed are at least one type selected from regenerated fibers, semi-synthetic fibers, synthetic fibers and natural fibers.

The regenerated fibers include viscose fibers, Cupra fibers, polynosic fibers, high wet modulus rayon fibers and solvent-spun cellulose fibers, etc.

The semi-synthetic fibers include acetate fibers, diacetate fibers, triacetate fibers, etc.

The synthetic fibers include polyamide fibers, acrylic fibers, vinylon fibers polypropylene fibers, polyurethane fibers, polyvinyl chloride fibers, polyethylene fibers, promix fibers, etc.

The natural fibers include cotton fibers, kapok fibers, hemp fibers, flax fibers, ramie fibers, wool fibers, alpaca fibers, cashmere fibers, mohair fibers, silk fibers, etc.

The composite mode can be any mode of fibers-mixed spinning, threads-mixed weaving, threads-mixed knitting, etc. The mode of the fiber structure can be any mode of filaments, spun yarns, and woven fabric, knitted fabric, nonwoven fabric and other manufactured article formed thereof.

In this invention, polyester-based fibers and other fibers can be mixed by any arbitrary method, but if the rate of polyester-based fibers is small, the effect of this invention is small. Therefore, it is preferred that the rate of the polyester-based fibers is 10 wt% or more. More preferred is 20 wt% or more, and further more preferred is 30 wt% or more.

Polyester-based fibers are low in hygroscopicity. Therefore, if a fiber structure formed of polyester-based fibers only is used as underwear or a shirt or the like worn near the skin, the wearer may feel discomfort since the fiber structure does not absorb sweat. On the other hand, a fiber structure formed of cellulose-based fibers only is very hygroscopic. Therefore, when the fiber structure absorbs sweat, the wearer feels heavy and the fiber structure is unlikely to be dried. A fiber structure consisting of polyester-based fibers and cellulose-based fibers has moderate hygroscopicity and can be worn comfortably.

However, cellulose-based fibers typified by cotton fibers are exposed to strong alkaline conditions during desizing, scouring and bleaching in the dyeing process. Therefor, if a material consisting of cellulose-based fibers and polyester-based fibers is dyed, the tenacity of the material may decline since the polyester-based fibers are hydrolyzed. In the case where the technique of this invention is applied, since the hydrolysis resistance of the polyester-based fibers is enhanced, the fibers can be used in combination with cellulose-based fibers.

In this invention, the polyester-based fibers may contain a terminal blocking agent beforehand. In the processing of polyester-based fibers, the high wet heat treatment typified by the dyeing step damages the polyester-based fibers without fail by decreasing the molecular weight and increasing the amount of terminal carboxyl groups, even though the strength may not decline superficially. If this invention is applied to the dyeing step in which the polyester-based fibers are generally exposed to the highest wet heat condition in the dyeing process, the hydrolysis during dyeing can be inhibited to inhibit the decline of molecular weight, and the increase in the amount of terminal carboxyl groups can be inhibited or decreased to further enhance the hydrolysis resistance of polyester-based fibers.

The polyester-based fibers containing a terminal blocking agent beforehand can be obtained by letting an adequate amount of a terminal blocking agent such as a carbodiimide compound, epoxy compound or oxazoline compound react with a polyester-based polymer kept in a molten state. The method for letting the polyester-based fibers contain a terminal blocking agent can be, for example, a method of adding a terminal blocking agent to a polyester-based polymer kept in a molten state immediately after completion of polymerization reaction, and stirring for reaction, a method of adding and mixing a terminal blocking agent to and with the chips of polylactic acid, and subsequently kneading for reaction using a reactor or extruder, for example, a method of continuously adding a liquid terminal blocking agent to a polyester-based polymer and kneading for reaction using an extruder, or a method of kneading blended chips obtained by blending the master chips of a polyester-based polymer with a high terminal blocking agent content and the homo-chips of the polyester-based polymer for reaction using an extruder, for example, though the method is not limited to these methods. In the case where a terminal blocking agent is added to a polyester-based polymer kept in a molten state owing to polymerization, it is preferred to add the terminal blocking agent for reaction after completion of the polymerization reaction of the polymer in view of the higher polymerization degree of the polyester-based polymer and the less remaining amount of the low molecular weight polymer.

The terminal blocking agent referred to in this invention includes two types; one terminal blocking agent is contained in the polyester-based fibers beforehand and the other terminal blocking agent is made to be taken up by the polyester-based fibers.

It is preferred that the compound used as the terminal blocking agent to be contained beforehand in the polyester-based fibers in this invention is an addition reaction type compound selected from carbodiimide compounds, epoxy compounds and oxazoline compounds.

Examples of the carbodiimide compounds include N,N'-di-o-tolylcarbodiimide, N,N'-diphenylcarbodiimide, N,N'-dioctyldecylcarbodiimide, N,N'-di-2,6-dimethylphenylcarbodiimide, N-triyl-N'-cyclohexylcarbodiimide, N,N'-di-2,6-diisopropylphenylcarbodiimide, N,N'-di-2,6-di-tert-butylphenylcarbodiimide, N,N'-di-p-nitrophenylcarbodiimide, N,N'-di-p-aminophenylcarbodiimide, N,N'-di-p-hydroxyphenylcarbodiimide, N,N'-di-cyclohexylcarbodiimide, N,N'-di-p-tolylcarbodiimide, p-phenylene-bis-di-o-tolylcarbodiimide, p-phenylene-bis-dicyclohexylcarbodiimide, hexamethylene-bis-dicyclohexylcarbodiimide, ethylene-bis-diphenylcarbodiimide, N,N'-benzylcarbodiimide, N-octadecyl-N'-phenylcarbodiimide, N-benzyl-N'-phenylcarbodiimide, N-octadecyl-N'-tolylcarbodiimide, N-phenyl-N'-tolylcarbodiimide, N-benzyl-N'-tolylcarbodiimide, N,N'-di-o-ethylphenylcarbodiimide, N,N'-di-p-ethylphenylcarbodiimide, N,N'-di-o-isopropylphenylcarbodiimide, N,N'-di-p-isopropylphenylcarbodiimide, N,N'-di-o-isobutylphenylcarbodiimide, N,N'-di-p-isobutylphenylcarbodiimide, N,N'-di-2,6-diethylphenylcarbodiimide, N,N'-di-2-ethyl-6-isopropylphenylcarbodiimide, N,N'-di-2-isobutyl-6-isopropylphenylcarbodiimide, N,N'-di-2,4,6-trimethylphenylcarbodiimide, N,N'-di-2,4,6-triisopropylphenylcarbodiimide, N,N'-di-2,4,6-triisobutylphenylcarbodiimide, N,N'-diisopropylcarbodiimide and aromatic polycarbodiimide. Above all, in view of heat resistance and handling convenience, a polycarbodiimide compound can be suitably used, and as said polycarbodiimide compound, a compound obtained by polymerizing a diisocyanate compound can be suitably used. Especially, the polymer of 4,4'-dicyclohexylmethanecarbodiimide, the polymer of tetramethylxylylenecarbodiimide and a compound with its terminals blocked by polyethylene glycol or the like are preferred.

Further, it is only required to arbitrarily select one or more compounds from these carbodiimide compounds for blocking the carboxyl terminals of polylactic acid, and this invention is not limited at all by the carbodiimide compound selected for use.

Examples of the epoxy compounds include N-glycidylphthalimide, N-glycidyl-4-methylphthalimide, N-glycidyl-4,5-dimethylphthalimide, N-glycidyl-3-methylphthalimide, N-glycidyl-3,6-dimethylphthalimide, N-glycidyl-4-ethoxyphthalimide, N-glycidyl-4-chlorophthalimide, N-glycidyl-4,5-dichlorophthalimide, N-glycidyl-3,4,5,6-tetrabromophthalimide, N-glycidyl-4-n-butyl-5-bromophthalimide, N-glycidylsuccinimide, N-glycidylhexahydrophthalimide, N-glycidyl-1,2,3,6-tetrahydrophthalimide, N-glycidylmaleinimide, N-glycidyl-$\alpha,\beta$-dimethylsuccinimide, N-glycidyl-$\alpha$-ethylsuccinimide, N-glycidyl-$\alpha$-propylsuccinimide, N-glycidyl benzamide, N-glycidyl-p-methylbenzamide, N-glycidyl naphthamide, N-glycidyl steramide, N-methyl-4,5-epoxycyclohexane-1,2-dicarboxylic acid imide, N-ethyl-4,5-epoxycyclohexane-1,2-dicarboxylic acid imide, N-phenyl-4,5-epoxycyclohexane-1,2-dicarboxylic acid imide, N-naphthyl-4,5-epoxycyclohexane-1,2-dicarboxylic acid imide, N-tolyl-3-methyl-4,5-epoxycyclohexane-1,2-dicarboxylic acid imide, ortho-phenyl glycidyl ether, 2-methyloctyl glycidyl ether, phenyl glycidyl ether, 3-(2-xenyloxy)-1,2-epoxypropane, allyl glycidyl ether, butyl glycidyl ether, lauryl glycidyl ether, benzyl glycidyl ether, cyclohexyl glycidyl ether, $\alpha$-cresyl glycidyl ether, p-t-butylphenyl glycidyl ether, methacrylic acid glycidyl ether, ethylene oxide, propylene oxide, styrene oxide, octylene oxide, hydroquinone diglycidyl ether, resorcin diglycidyl ether, 1,6-hexanediol diglycidyl ether and hydrogenated bisphenol A-diglycidyl ether, and further, terephthalic acid diglycidyl ester, tetrahydrophthalic acid diglycidyl ester, hexahydrophthalic acid diglycidyl ester, phthalic acid dimethyl diglycidyl ester, phenylene diglycidyl ether, ethylene diglycidyl ether, trimethylene diglycidyl ether, tetramethylene diglycidyl ether, hexamethylene diglycidyl ether and triglycidyl isocyanurate. Above all, triglycidyl isocyanurate, monoallyl diglycidyl isocyanurate and diallyl monoglycidyl isocyanurate are preferred, since they are high in melting point due to the triazine ring skeleton they have, and also excellent in heat resistance. Especially it is preferred that the epoxy group is bi- or lower functional since the decline of spinnability caused by molecular crosslinking can be prevented. It is only required to arbitrarily select one or more compounds from these epoxy compounds, for blocking the carboxyl terminals of polylactic acid, and this invention is not limited at all by the epoxy compound selected for use.

Examples of the oxazoline compounds include 2-methoxy-2-oxazoline, 2-ethoxy-2-oxazoline, 2-propoxy-2-oxazoline, 2-butoxy-2-oxazoline, 2-pentyloxy-2-oxazoline, 2-hexyloxy-2-oxazoline, 2-heptyloxy-2-oxazoline, 2-octyloxy-2-oxazoline, 2-nonyloxy-2-oxazoline, 2-decyloxy-2-oxazoline, 2-cyclopentyloxy-2-oxazoline, 2-cyclohexyloxy-2-oxazoline, 2-allyloxy-2-oxazoline, 2-metaallyloxy-2-oxazoline, 2-crotyloxy-2-oxazoline, 2-phenoxy-2-oxazoline, 2-cresyl-2-oxazoline 2-o-ethylphenoxy-2-oxazoline, 2-o-propylphenoxy-2-oxazoline, 2-o-phenylphenoxy-2-oxazoline, 2-m-ethylphenoxy-2-oxazoline, 2m-propylphenoxy-2-oxazoline, 2-p-phenylphenoxy-2-oxazoline, 2-methyl-2-oxazoline, 2-ethyl-2-oxazoline, 2-propyl-2-oxazoline, 2-butyl-2-oxazoline, 2-pentyl-2-oxazoline, 2-hexyl-2-oxazoline, 2-heptyl-2-oxazoline, 2-octyl-2-oxazoline, 2-nonyl-2-oxazoline, 2-decyl-2-oxazoline, 2-cyclopentyl-2-oxazoline, 2-cyclohexyl-2-oxazoline, 2-allyl-2-oxazoline, 2-metaallyl-2-oxazoline, 2-crotyl-2-oxazoline, 2-phenyl-2-oxazoline 2-o-ethylphenyl-2-oxazoline, 2-o-propylphenyl-2-oxazoline, 2-o-phenylphenyl-2-oxazoline, 2-m-ethylphenyl-2-oxazoline, 2-m-propylphenyl-2-oxazoline and 2-p-phenylphenyl-2-oxazoline, further 2,2'-bis(2-oxazoline), 2,2'-bis(4-methyl-2-oxazoline), 2,2'-bis(4,4'-dimethyl-2-oxazoline), 2,2'-bis(4-ethyl-2-oxazoline), 2,2'-bis(4,4'-diethyl-2-oxazoline), 2,2'-bis(4-propyl-2-oxazoline), 2,2'-bis(4-butyl-2-oxazoline), 2,2'-bis(4-hexyl-2-oxazoline), 2,2'-bis(4-phenyl-2-oxazoline), 2,2'-bis(4-cyclohexyl-2-oxazoline), 2,2'-bis(4-benzyl-2-oxazoline), 2,2'-p-phenylenebis(2-oxazoline), 2,2'-m-phenylenebis(2-oxazoline), 2,2'-o-phenylenebis(2-oxazoline), 2,2'-p-phenylenebis(4-methyl-2-oxazoline), 2,2'-p-phenylenebis(4,4'-dimethyl-2-oxazoline), 2,2'-m-phenylenebis(4-methyl-2-oxazoline), 2,2'-m-phenylenebis(4,4'-dimethyl-2-oxazoline), 2,2'-ethylenebis(2-oxazoline), 2,2'-tetramethylenebis(2-oxazoline), 2,2'-hexamethylenebis(2-oxazoline), 2,2'-octamethylenebis(2-oxazoline), 2,2-decamethylenebis(2-oxazoline), 2,2'-ethylenebis(4-methyl-2-oxazoline), 2,2'-tetramethylenebis(4,4'-dimethyl-2-oxazoline), 2,2'-9,9'-diphenoxyethanebis(2-oxazoline), 2,2'-cyclohexylenebis(2-oxazoline) and 2,2'-diphenylenebis(2-oxazoline). Furthermore, a polyoxazoline compound containing any of the abovementioned compounds as monomer units, for example, styrene/2-isopropenyl-2-oxazoline copolymer can also be used. It is only required to arbitrarily select one or more compounds from these oxazoline compounds, for blocking the carboxyl terminals of polylactic acid, and this invention is not limited at all by the oxazoline compound selected for use.

Two or more compounds selected from the abovementioned carbodiimide compounds, epoxy compounds and oxazoline compounds can also be used together as terminal blocking agents.

In this invention, the abovementioned polyester-based fibers containing a terminal blocking agent beforehand or the polyester-based fibers not containing a terminal blocking agent are further treated to take up a terminal blocking agent. The terminal blocking agent to be taken up can be selected from the abovementioned compounds, but it is difficult to let the polyester-based fibers take up a high molecular weight compound. Therefore, it is preferred to use a terminal blocking agent other than high molecular weight compounds such as aromatic polycarbodiimide compounds and polyoxazoline compounds. The method of giving a terminal blocking agent to the fibers is required to let the fibers take up the terminal blocking agent, and modes for giving a terminal blocking agent are described below.

As one treatment method, it is preferred to immerse the fibers into a solution containing the aforementioned terminal blocking agent using a jet dyeing machine for example and to heat-treat at 80 to 130°C at normal pressure or under pressurization. It is preferred that the heat treatment time is 10 to 120 minutes. It is preferred to treat while the treatment solution containing the terminal blocking agent is circulated, since the homogeneity of fiber treatment can be enhanced. In the case of an aliphatic polyester, it is more preferred that the treatment is performed at 90 to 110°C for 20 to 60 minutes. In the case of an aromatic polyester, it is more preferred that the treatment is performed at 110 to 130°C for 20 to 60 minutes. In this case, the terminal blocking agent is deposited outside the fibers and taken up to diffuse inside the fibers.

The modes of the fibers include a fabric, yarns, other manufactured article, tow, cotton batting, for example and is not limited to them. The treatment apparatus for processing in a bath can be a wince dyeing machine, jigger, jet dyeing machine, air flow dyeing machine or beam dyeing machine for a fabric, or a cheese dyeing machine for yarns, overmaier for tow or cotton batting, for example, though not limited to them.

A dye, dyeing auxiliary, pH regulator, for example can also be added to the treatment solution containing a terminal blocking agent, to concurrently perform dyeing and terminal blocking treatment. It is preferred that dyeing and terminal blocking treatment are performed concurrently for such reasons that the treatment process can be rationalized economically advantageously in the case where the fibers require dyeing and that the terminal carboxyl groups produced while the polyester-based fibers are dyed can be blocked to further enhance the wet heat hydrolysis resistance. As the dye, a hydrophobic dye typified by a disperse dye can be preferably used, but in the case where ionic polar groups are copolymerized, a dye capable of being ionically bound to the polar groups can also be preferably used. For example, in the case where a monomer having an anionic group is copolymerized, a cationic dye can be used.

The solution containing a terminal block agent can further contain a dispersing agent, level dyeing agent, softening agent, antistatic agent, antimicrobial agent, surfactant, penetrant, pH regulating agent, for example, if they do not inhibit the reaction of the terminal blocking agent.

In the state where the terminal blocking agent is taken up by the polyester-based fibers, the reaction with the terminal carboxyl groups may be insufficient. Therefore, in this method, after treatment in the solution, it is preferred to perform dry heat treatment using a heat treatment apparatus such as a tenter.

In another preferred mode of the method for treating the polyester-based fibers of this invention, the aforementioned solution containing a terminal blocking agent is deposited on the fiber structure by padding treatment or spray treatment and subsequently dry heat or wet heat treatment is performed.

As the treatment apparatus, an ordinary mangle can be suitably used as a liquid-giving apparatus, but any apparatus can be used if it can give the solution uniformly to the fibers. A coating method or foam processing machine or the like can also be used for giving the solution. As a drying or heat treatment apparatus, a tenter, short loop dryer, shrink surfer, steamer or cylinder dryer, for example can be used, but the apparatus is not limited to them, if it can give heat uniformly to the fibers. It is preferred that a fabric is immersed in the treatment solution containing a terminal blocking agent and squeezed uniformly, being dried and subjected to dry heat treatment at 80 to 170°C. The treatment time can be 15 seconds to 8 minutes. In the case of an aliphatic polyester, it is more preferred to treat at 90 to 130°C for 30 seconds to 5 minutes, and in the case of an aromatic polyester, it is more preferred to treat at 130 to 170°C for 30 seconds to 5 minutes. Some terminal blocking agents do not require dry heat treatment, since the terminal blocking agents can sufficiently react with the terminal carboxyl groups during the uptake treatment.

The solution containing a terminal blocking agent may further contain a dye, dispersing agent, level dyeing agent, softening agent, antistatic agent, antimicrobial agent, surfactant, penetrant, pH regulator, for example, if they do not inhibit the reaction of the terminal blocking agent.

The amount of the terminal blocking agent can be arbitrarily decided in response to the amount of the terminal carboxyl groups of the polyester-based fibers and to the required hydrolysis resistance.

If the fibers are made to take up a terminal blocking agent, for allowing the terminal blocking agent to react with the terminal carboxyl groups in the polymer, to lower the terminal carboxyl group concentration, the fibers can have hydrolysis resistance. When the terminal blocking agent is taken up, the terminal blocking agent contacts the fibers on the outside and subsequently diffuses into the fibers. Therefore, there arises a difference between the terminal blocking agent concentration in the outer layer portion of the fibers and the terminal blocking agent concentration in the inner layer, and the concentration of the terminal blocking agent contained in the outer layer portion becomes larger.

In the case of a substance not strongly interacting with the polymer constituting the polyester-based fibers, such as a disperse dye, if the treatment time is sufficiently long, the substance uniformly diffuses into the fibers in a tendency to eliminate the concentration difference between the outer layer and the inner layer, but since the reaction between the terminal blocking agent and the terminal carboxyl groups of the polyester polymer progresses simultaneously with diffusion, the concentration difference between the outer layer portion and the inner layer portion is likely to be produced. In the case where the polyester polymer merely contains a terminal blocking agent beforehand and does not take up the terminal blocking agent, the terminal blocking agent exists uniformly inside the fibers. Therefore, this configuration can be distinguished from the technique of this invention.

For the present fibers the difference between the terminal blocking agent concentration of the outer layer portion and the terminal blocking agent concentration of the inner layer portion is in the following state.

If the outer fiber layer portion obtained by removing the solvent from the solution that has 5 to 10 wt% of the outer layer portion of the fibers dissolved in the solvent is N1 and the inner fiber layer portion remaining after hydrolyzing and removing the outer layer portion of the fibers is N2, then the concentration of the terminal blocking agent contained in N1 is larger than the concentration of the terminal blocking agent contained in N2.

A case of using polylactic acid fibers is particularly explained below.

At first, 5 to 10 wt% of the outer layer portion of the fibers is dissolved in a good solvent of polylactic acid fibers such as dichloromethane or chloroform. If the solubility of the solvent is too large, it is difficult to dissolve the outer layer only. Therefore, a solvent for lowering the solubility of the good solvent, for example, methanol is mixed with the good solvent, to obtain a mixed solvent, and the outer layer portion is dissolved in the mixed solvent, to obtain a solution, and the solvent is removed from the solution, to obtain the outer fiber layer portion N1. Then, the terminal blocking concentration of N1 is measured. Further, for taking out the inner layer only of the fibers, sodium hydroxide as a hydrolysis promoter is used to treat the fibers at not higher than the glass transition point of the fiber polymer in such a manner that the terminal blocking agent concentration of the inner layer portion does not change, for hydrolyzing the outer layer only. Thus, the remaining inner fiber layer portion N2 can be taken out, and it is used to measure the terminal blocking agent concentration. The taken out sample is, for example, cast into a film or the like by any arbitrary method for preparing a specimen, and the terminal blocking agent is detected by an arbitrary method.

As the detection method, an arbitrary method such as IR spectrum, UV spectrum, fluorescent spectrum or Raman spectroscopic spectrum can be used for measurement. A calibration curve is prepared beforehand, and the peak peculiar to each terminal blocking agent is detected to measure the concentration of the terminal blocking agent contained in the outer layer portion or in the inner layer portion. For example, in the case where polyester-based fibers are polylactic acid fibers while the terminal blocking agent has a benzene ring in the molecular structure, it is preferred to use the UV spectrum or fluorescent spectrum.

In another mode, the fibers can be cut in the cross-sectional direction, and the cross section of the fibers is directly measured by TOF-SIMS or Raman spectroscopic spectrum, and from the integral values of the spectral peaks peculiar to the terminal blocking agent, the concentration distribution of the terminal blocking agent in the outer layer and the inner layer of the fibers can be obtained.

Of course, the method for evaluating the concentration distribution of a terminal blocking agent in the outer layer portion and in the inner layer portion is not limited to these methods.

The terminal blocking agent used in this invention is used as in the state of particles with a particle size of 100 μm or less, since it can be efficiently absorbed into the fibers. The method for obtaining a terminal blocking agent of this state is not especially limited. For example, a terminal blocking agent solid at room temperature can be finely ground by a dry/wet method, or molten and subsequently finely crystallized, or dissolved into an adequate nonaqueous solvent and subsequently diluted with water, for forming fine particles, though not limited to these methods. An activator such as an emulsifier can also be used together for stabilization. A terminal blocking agent liquid at room temperature can be made to form fine particles by such a method as mechanical emulsification, phase inversion emulsification, liquid crystal emulsification, phase inversion temperature emulsification, D-phase emulsification or ultrafinely dividing emulsification using a solubilization region, though not limited to these methods.

The solution containing a terminal blocking agent can contain a dispersing agent, level dyeing agent, softening agent, antistatic agent, antimicrobial agent, surfactant, penetrant and pH regulator, if they do not inhibit the reaction of the terminal blocking agent.

If the treatment solution containing a terminal blocking agent is mixed with a hydrophobic dye typified by a disperse dye, terminal blocking treatment and dyeing can be performed concurrently. It is preferred that terminal blocking treatment is performed concurrently with dyeing, for such reasons that the dye concentration can be enhanced and that the number of times of undergoing a wet heat treatment step decreases to inhibit the hydrolysis of polyester-based fibers.

The polyester-based fibers obtained by this invention have high hydrolysis resistance and can be preferably used in extensive applications such as dress shirts, blouses, pants, skirts, polo shirts, T shirts, training wear, coats, sweaters, pajamas, school uniforms, work clothes, white robes, clean room wear, unlined kimonos, underwear, linings, interlinings, for example.

[Examples]

This invention is explained below more particularly in reference to examples; Example 1 does not illustrate fibers as claimed in claim 1. Meanwhile, the physical properties in the examples were measured according to the following methods.

(1) Terminal carboxyl group concentration (equivalents/$10^3$ kg) of polylactic acid: An accurately weighed sample was dissolved into an o-cresol solution (water content 5%), and an adequate amount of dichloromethane was added to the solution. Subsequently, 0.02N potassium hydroxide methanol solution was used for titration, to measure the concentration.

(2) Terminal carboxyl group concentration (equivalents/$10^3$ kg) of polyethylene terephthalate: An accurately weighed sample was dissolved into benzyl alcohol, and chloroform was added to the solution. Subsequently, 0.1N potassium hydroxide benzyl alcohol solution was used for titration, to measure the concentration.

(3) Strength (cN/dtex): The tenacity of the yarns obtained by decomposing a fabric was measured at a sample length of 20 cm and at a stress rate of 20 cm/min using Shimadzu Autograph AG-1S.

(4) Strength retaining rate (%) : The strength retaining rate was measured from the following formula:

```
Strength retaining rate (%) = (Tensile strength after hydrolysis
treatment)/(Tensile strength before hydrolysis treatment) × 100
Hydrolysis treatment: Treatment was performed at 70°C and 90% RH
for one week using a thermo-hygrostat (THN064PB) produced by
Advantec K.K.
```

(5) Burst tenacity (KPa): A knitted material sample of 15 cm x 15 cm was measured using a Mullen burst strength tester.

(Reference Example 1)

L-polylactic acid chips with a melting point of 166°C were dried in a vacuum dryer set at 105°C for 12 hours. The dried chips were charged into a melt spinning machine and melt-spun at a melting temperature of 210°C, at a spinning temperature of 220°C and at a spinning speed of 4500 m/min, to obtain unstretched 100 dtex/26-filament yarns. The unstretched yarns were stretched at a preheating temperature of 100°C, at a heat set temperature of 130°C and at a stretching ratio of 1.2 times, to obtain stretched 84 dtex/26-filament yarns. The obtained stretched yarns were used to weave taffeta that was scoured at 80°C and subsequently dry-heat-set at 130°C for 1 minute, to obtain a polylactic acid woven fabric.

The woven fabric formed of polylactic acid fibers prepared by the abovementioned method was made to have hydrolysis resistance by the following method. That is, the polylactic acid woven fabric was immersed in a solution containing 3% owf of N,N'-di-2,6-diisopropylphenylcarbodiimide (TIC) ground to an average particle size of 300 $\mu$m as a terminal blocking agent at a bath ratio of 1 : 30 using a high pressure dyeing tester and was processed at 110°C for 30 minutes according to a conventional method. Subsequently the woven fabric was washed with water and dried in air, being dry-heat-treated at 130°C for 2 hours, to obtain a polylactic acid fabric excellent in hydrolysis resistance. The treated woven fabric was treated to be hydrolyzed at 70°C and 90% RH for 7 days. After completion of the hydrolysis treatment, the stretched yarns showed a very high strength retaining rate (Table 1) .

The obtained sample not yet hydrolyzed was immersed in chloroform, to dissolve 7% of the outer layer of the sample, and it was cast to form a film. Further, the sample was treated in a solution containing 87.5% owf of sodium hydroxide and 10 g/L of a cationic surfactant (DYK1125 produced by Ipposha Oil Industries Co., Ltd.) as a promoter at a bath ratio 1 : 40 at 30°C for 1 hour, to hydrolyze 60% of the outer layer portion, and the remaining inner layer portion was taken out and cast to form a film using chloroform. A spectrophotometer UV3100 produced by Shimadzu Corp. was used to measure the UV spectra of both, and the characteristic peaks (absorption of phenyl group about 260 nm) of TIC were observed. It could be confirmed that the outer layer portion remarkably contained TIC.

(Example 2)

The woven fabric of polylactic acid fibers obtained in Example 1 was immersed in a solution containing 3% owf of N,N'-di-2,6-diisopropylphenylcarbodiimide emulsion treated to have an average particle size of 10 $\mu$m as a terminal blocking agent at a bath ratio of 1 : 30 using a high pressure dyeing tester, and processed at 110°C for 30 minutes according to a conventional method. Subsequently the woven fabric was washed with water and dried in air, to obtain a polylactic acid fabric excellent in hydrolysis resistance. The treated woven fabric was treated to be hydrolyzed at 70°C and 90% RH for 7 days. After completion of the hydrolysis treatment, the stretched yarns showed a very high strength retaining rate (Table 1).

(Example 3)

The woven fabric of polylactic acid fibers obtained in Example 1 was immersed in a solution containing 3% owf of N,N'-2,6-diisopropyldiphenylcarbodiimide emulsion treated to have an average particle size of 10 $\mu$m as a terminal blocking agent, 5% owf of Denapla Black GS (a dye for polylactic acid fibers, produced by Nagase Colors & Chemicals Co., Ltd.) as a dye, 1 g/L of Nicca Sunsolt SN-130E (produced by Nicca Chemical Co., Ltd.) as a level dyeing agent and 0.3 g/L of 80% acetic acid, at a bath ratio of 1 : 30, using a high pressure dyeing tester, and processed at 110°C for 30 minutes according to a conventional method. Subsequently the woven fabric was washed with water and dried in air, to obtain a polylactic acid fabric excellent in hydrolysis resistance. The treated woven fabric was treated to be hydrolyzed at 70°C and 90% RH for 7 days. After completion of the hydrolysis treatment, the stretched yarns showed a very high strength retaining rate (Table 1) .

(Example 4)

The woven fabric of polylactic acid fibers obtained in Example 1 was immersed in a solution containing 3% owf of N,N'-diisopropylcarbodiimide emulsion treated to have an average particle size of 20 $\mu$m as a terminal blocking agent at a bath ratio of 1 : 30, and processed at 110°C for 30 minutes according to a conventional method. Subsequently the woven fabric was washed with water and dried in air, to obtain a polylactic acid fabric excellent in hydrolysis resistance. The treated woven fabric was treated to be hydrolyzed at 70°C and 90% RH for 7 days. After completion of the hydrolysis treatment, the stretched yarns showed a very high strength retaining rate (Table 1).

(Example 5)

A publicly known method was used to obtain 84 dtex/26-filament polyethylene terephthalate (PET) stretched yarns. The obtained filaments were woven to obtain taffeta that was scoured at 80°C for 20 minutes according to a conventional method and dry-heat-set at 170°C for 1 minute, to obtain a PET woven fabric. For letting the woven fabric of PET fibers prepared by the abovementioned method have hydrolysis resistance, the following method was carried out. That is, the PET woven fabric was immersed in a solution containing 3% owf of N,N'-di-2,6-diisopropylphenylcarbodiimide ground to an average particle size of 20 $\mu$m as a terminal blocking agent, 12% owf of Dianix Tuxedo Black H CONC (a disperse dye for PET fibers produced by DyStar Japan Ltd.) as a dye, 1 g/L of Nicca Sunsolt SN-130E (produced by Nicca Chemical Co., Ltd.) as a level dyeing agent and 0.3 g/L of 80% acetic acid, at a bath ratio of 1 : 30, using a high pressure dyeing tester, and processed at 130°C for 30 minutes according to a conventional method. Subsequently the woven fabric was washed with water and dried in air, being dry-heat-treated at 130°C for 2 minutes, to obtain a PET fabric excellent in hydrolysis resistance. The treated woven fabric was treated to be hydrolyzed at 70°C and 90% RH for 7 days. After completion of the hydrolysis treatment, the stretched yarns showed a very high strength retaining rate (Table 1).

(Example 6)

As warp yarns, 84 dtex/26-filament polylactic acid yarns were used, and as weft yarns, 75 dtex/33-filament rayon yarns were used, to weave a plain weave with a warp density of 102 yarns/2.54 cm and a weft density of 60 yarns/2.54 cm. The woven fabric was scoured at 80°C and heat-set at 130°C for 1 minute, to obtain a polylactic acid/rayon mixed woven fabric. For letting the woven fabric of polylactic acid fibers prepared by the abovementioned method have hydrolysis resistance, the following method was carried out. That is, the polylactic acid woven fabric was immersed in a solution containing 3% owf N,N'-diisopropylcarbodiimide as a terminal blocking agent at a bath ratio of 1 : 30 using a high pressure dyeing tester, and processed at 110°C for 30 minutes according to a conventional method. Subsequently the woven fabric was washed with water and dried in air, being dry-heat-treated at 130°C for 2 minutes. The treated woven fabric was treated to be hydrolyzed at 70°C and 90% RH for 7 days. After completion of the hydrolysis treatment, the polylactic acid fibers as warp fibers showed a very high strength retaining rate (Table 1).

(Example 7)

As warp yarns, 84 dtex/26-filament polylactic acid yarns were used, and as weft yarns, 100 dtex/27-filament diacetate yarns were used, to weave a plain weave with a warp density of 102 yarns/2.54 cm and a weft density of 60 yarns/2.54 cm. The woven fabric was scoured at 80°C and heat-set at 130°C for 1 minute, to obtain a polylactic acid/acetate mixed woven fabric. For letting the woven fabric of polylactic acid fibers prepared by the abovementioned method have hydrolysis resistance, the following method was carried out. That is, the polylactic acid woven fabric was immersed in a solution containing 3% owf of N,N'-di-2,6-diisopropylphenylcarbodiimide as a terminal blocking agent at a bath ratio of 1 : 30 using a high pressure dyeing tester, and processed at 110°C for 30 minutes according to a conventional method. Subsequently the woven fabric was washed with water and dried in air, being dry-heat-treated at 130°C for 2 minutes. The treated woven fabric was treated to be hydrolyzed at 70°C and 90% RH for 7 days. After completion of the hydrolysis treatment, the polylactic acid fibers as warp yarns showed a very high strength retaining rate (Table 1).

(Example 8)

As warp yarns, 84 dtex/26-filament polylactic acid false twisted yarns were used, and as weft yarns, 84 dtex/36-filament polyethylene terephthalate false twisted yarns were used, to weave a plain weave with a warp density of 102 yarns/2.54 cm and a weft density of 60 yarns/2.54 cm. The woven fabric was scoured at 80°C and heat-set at 130°C for 1 minute, to obtain a polylactic acid/polyethylene terephthalate mixed woven fabric. For letting the woven fabric of polylactic acid fibers prepared by the abovementioned method have hydrolysis resistance, the following method was carried out. That is, the polylactic acid woven fabric was immersed in a solution containing 6% owf of N,N'-di-2,6-diisopropylphenylcarbodiimide as a terminal blocking agent at a bath ratio of 1 : 30 using a high pressure dyeing tester, and processed at 110°C for 30 minutes according to a conventional method. Subsequently the woven fabric was washed with water and dried in air, being dry-heat-treated at 130°C for 2 minutes. The treated woven fabric was treated to be hydrolyzed at 70°C and 90% RH for 7 days. After completion of the hydrolysis treatment, the polylactic acid fibers as warp yarns showed a very high strength retaining rate (Table 1).

(Example 9)

As warp yarns, 84 dtex/26-filament polylactic acid yarns were used, and as weft yarns, spun cotton yarns of 40 in yarn number count were used to weave a plain weave with a warp density of 102 yarns/2.54 cm and a weft density of 60 yarns/2.54 cm. The woven fabric was scoured at 80°C and heat-set at 130°C for 1 minute, to obtain a polylactic acid/cotton mixed woven fabric. For letting the woven fabric of polylactic acid fibers prepared by the abovementioned method have hydrolysis resistance, the following method was carried out. That is, the polylactic acid woven fabric was immersed in a solution containing 3.5% owf of N,N'-di-2,6-diisopropylphenylcarbodiimide as a terminal blocking agent at a bath ratio of 1 : 30 using a high pressure dyeing tester, and processed at 110°C for 30 minutes according to a conventional method. Subsequently the woven fabric was washed with water and dried in air, being dry-heat-treated at 130°C for 2 hours. The treated woven fabric was treated to be hydrolyzed at 70°C and 90% RH for 7 days. After completion of the hydrolysis treatment, the polylactic acid fibers showed a very high strength retaining rate (Table 1).

(Example 10)

Mixed spun yarns of 40 in yarn number count consisting of 70% of cotton fibers with an average fiber length of 35 mm and 30% of polylactic acid fibers with a fiber diameter of 1.5d and a fiber length of 38 mm were used to prepare a 22G smooth knit. The knit was scoured at 80°C and subsequently immersed in a solution containing 3% owf of N,N'-diisopropylcarbodiimide as a terminal blocking agent at a bath ratio of 1 : 30 using a high pressure dyeing tester, and processed at 110°C for 30 minutes according to a conventional method. Subsequently the knit was washed with water and dried in air, being dry-heat-treated at 130°C for 2 minutes. The treated knit was treated to be hydrolyzed at 70°C and 90% RH for 7 days. After completion of the hydrolysis treatment, the fabric showed a very high strength retaining rate (Table 3).

(Example 11)

DuPont Biomax fibers (a PET copolymer consisting of ethylene glycol and terephthalic acid/succinic acid, fiber diameter 1.5 d, fiber length 38 mm) were mixed with cotton fibers with an average fiber length of 35 mm at a ratio of 45% of Biomax fibers: 55% of cotton fibers, to obtain spun yarns of 45 in yarn number count. Said spun yarns only were used to prepare a plain weave. The woven fabric was desized, scoured and bleached according to conventional methods, and subsequently heat-set at 130°C for 1 minute, to obtain a Biomax/cotton mixed woven fabric. The woven fabric was immersed in a solution containing 3% owf of N,N'-di-2,6-diisopropylphenylcarbodiimide emulsion treated to have an average particle size of 20 $\mu$m as a terminal blocking agent, 5% owf of Denapla Black GS (a dye for polylactic acid fibers, produced by Nagase Colors & Chemicals Co., Ltd.) as a dye, 1 g/L of Nicca Sunsolt SN-130E (Nicca Chemical Co., Ltd.) as a level dyeing agent and 0.3 g/L of 80% acetic acid, at a bath ratio of 1 : 30, using a high pressure dyeing tester, and processed at 110°C for 30 minutes according to a conventional method. Subsequently the woven fabric was washed with water and dried in air, to obtain a polylactic acid fabric excellent in hydrolysis resistance. The treated woven fabric was treated to be hydrolyzed at 70°C and 90% RH for 7 days. After completion of the hydrolysis treatment, the spun yarns showed a very high strength retaining rate (Table 1).

(Example 12)

L-polylactic acid chips with a melting point of 166°C were dried in a vacuum dryer set at 105°C for 12 hours. The dried chips were charged into a melt spinning machine and melted at 210°C. Separately, polycarbodiimide "Carbodilite" HMV-8CA (thermoplastic carbodiimide produced by Nisshinbo Industries, Inc.) was melted at 120°C. The molten polylactic acid and polycarbodiimide were introduced into a spinning pack, and kneaded with the amount of polycarbodiimide kept at 1% by a stationary kneader in the spinning pack, and melt-spun at a spinning temperature of 220°C and at a spinning speed of 4500 m/min, to obtain 100 dtex/26-filament unstretched yarns. The unstretched yarns were stretched at a preheating temperature of 100°C, at a heat set temperature of 130°C and at a spinning ratio of 1.2 times, to obtain 84 dtex/26-filament stretched yarns. The obtained stretched yarns were used to weave taffeta that was scoured at 80°C and dry-heat-set at 130°C for 1 minute, to obtain a polylactic acid woven fabric.

For letting the woven fabric of polylactic acid fibers prepared by the abovementioned method have high hydrolysis resistance, the following method was carried out. That is, the polylactic acid woven fabric was immersed in a solution containing 3% owf of N,N'-di-2,6-diisopropylphenylcarbodiimide treated to have an average particle size of 20 $\mu$m as a terminal blocking agent, 5% owf of Denapla Black GS (a dye for polylactic acid fibers, produced by Nagase Colors and Chemicals Co., Ltd.) as a dye, 1 g/L of Nicca Sunsolt SN-130E (produced by Nicca Chemical Co., Ltd.) as a level dyeing agent and 0.3 g/L of 80% acetic acid, at a bath ratio of 1 : 30, using a high pressure dyeing tester, and processed at 110°C for 30 minutes according to a conventional method. Subsequently the woven fabric was washed with water and dried in air, being dry-heat-treated at 130°C for 2 minutes, to obtain a polylactic acid fabric excellent in hydrolysis resistance. The treated woven fabric was treated to be hydrolyzed at 70°C and 90% RH for 7 days. After completion of the hydrolysis treatment, the yarns showed a very high strength retaining rate (Table 1).

(Example 13)

L-polylactic acid chips with a melting point of 166°C were dried in a vacuum dryer set at 105°C for 12 hours. Diallyl monoglycidyl isocyanurate was added to the dried chips by melt kneading, to prepare chips containing 5.0 wt% of diallyl monoglycidyl isocyanurate. The prepared chips containing diallyl monoglycidyl isocyanurate and the chips not containing the isocyanurate were mixed by a chip mixer, to achieve a diallyl monoglycidyl isocyanurate content of 20%, and the mixed chips were charged into a melt spinning machine, to be melt-spun at a melting temperature of 210°C, at a spinning temperature of 220°C and at a spinning speed of 4500 m/min, to obtain 100 dtex/26-filament unstretched yarns. The unstretched yarns were stretched at a preheating temperature of 100°C, at a heat set temperature of 130°C and at a stretching ratio of 1.2 times, to obtain 84 dtex/26-filament stretched yarns. The obtained stretched yarns were used to weave taffeta that was scoured at 80°C and dry-heat-set at 130°C for 1 minute, to obtain a polylactic acid woven fabric.
For letting the woven fabric of polylactic acid fibers prepared by the abovementioned method have hydrolysis resistance, the following method was carried out. That is, the polylactic acid woven fabric was immersed in a solution containing 3% owf of N,N'-diisopropylcarbodiimide treated to have an average particle size of 20°C as a terminal blocking agent, 5% owf of Denapla Black GS (a dye for polylactic acid fibers, produced by Nagase Colors & Chemicals Co., Ltd.) as a dye, 1 g/L of Nicca Sunsolt SN-130E (produced by Nicca Chemical Co., Ltd.) as a level dyeing agent and 0.3 g/L of 80% acetic acid at a bath ratio of 1 : 30 using a high pressure dyeing tester, and processed at 110°C for 30 minutes according to a conventional method. Subsequently the woven fabric was washed with water and dried in air, being dry-heat-treated at 130°C for 2 hours, to obtain a polylactic acid fabric excellent in hydrolysis resistance. The treated woven fabric was treated to be hydrolyzed at 70°C and 90% RH for 7 days. After completion of the hydrolysis treatment, the yarns showed a very high strength retaining rate (Table 1).

(Example 14)

L-polylactic acid chips with a melting point of 166°C were dried in a vacuum dryer set at 105°C for 12 hours. Triglycidyl isocyanurate was added to the dried chips by melt kneading, to prepare chips containing 5.0 wt% of triglycidyl isocyanurate. The prepared chips containing triglycidyl isocyanurate and the chips not containing the isocyanurate were mixed by a chip mixer to achieve a triglycidyl isocyanurate content of 20%, and the mixed chips were charged into a melt spinning machine and melt-spun at a melting temperature of 210°C, at a spinning temperature of 220°C and at a spinning speed of 4500 m/min, to obtain 100 dtex/26-filament unstretched yarns. The unstretched yarns were stretched at a preheating temperature of 100°C, at a heat set temperature of 130°C and at a stretching ratio of 1.2 times, to obtain 84 dtex/26-filament stretched yarns. The obtained stretched yarns were used to weave taffeta that was scoured at 80°C and dry-heat-set at 130°C for 1 minute, to obtain a polylactic acid woven fabric.
For letting the woven fabric of polylactic acid fibers prepared by the abovementioned method have hydrolysis resistance, the following method was carried out. That is, the polylactic acid woven fabric was immersed in a solution containing 3% owf of N,N'-di-2,6-diisopropylphenylcarbodiimide treated to have an average particle size of 20 $\mu$m as a terminal blocking agent, 5% owf of Denapla Black GS (a dye for polylactic acid fibers, produced by Nagase Colors & Chemicals Co., Ltd.) as a dye, 1 g/L of Nicca Sunsolt SN-130E (produced by Nicca Chemical Co., Ltd.) as a level dyeing agent and 0.3 g/L of 80% acetic acid at a bath ratio of 1 : 30 using a high pressure dyeing tester, and processed at 110°C for 30 minutes according to a conventional method. Subsequently the woven fabric was washed with water and dried in air, being dry-heat-treated at 130°C for 2 minutes, to obtain a polylactic acid fabric excellent in hydrolysis resistance. The treated woven fabric was treated to be hydrolyzed at 70°C and 90% RH for 7 hours. After completion of the hydrolysis treatment, the yarns showed a very high strength retaining rate (Table 1).

(Comparative Example 1)

The stretched yarns used in Example 1 were treated to be hydrolyzed at 70°C and 90% RH for 7 days. After completion of the hydrolysis treatment, the stretched yarns had been hydrolyzed so much that the yarn strength could not be measured (Table 2).

(Comparative Example 2)

The woven fabric of Comparative Example 2 was obtained by performing treatment as described in Example 3, except that the terminal blocking treatment was not performed. After completion of the hydrolysis treatment, the stretched yarns had been hydrolyzed so much that the yarn strength could not be measured (Table 2).

(Comparative Example 3)

The woven fabric of Comparative Example 3 was obtained by performing treatment as described in Example 5, except that the terminal blocking treatment was not performed. A publicly known method was used to obtain 84 dtex/26-filament polyethylene terephthalate (PET) stretched yarns. After completion of the hydrolysis treatment, the stretched yarns had a small strength retaining rate (Table 2).

(Comparative Example 4)

The woven fabric of comparative Example 4 was obtained by performing treatment as described in Example 6, except that the terminal blocking treatment was not performed. After completion of the hydrolysis treatment, the polylactic acid fibers as warp yarns greatly declined in strength (Table 2).

(Comparative Example 5)

The knit of Comparative Example 5 was obtained by performing treatment as described in Example 10, except that the terminal blocking treatment was not performed. After completion of the hydrolysis treatment, the fabric greatly declined in strength (Table 3).

(Comparative Example 6)

The woven fabric of Comparative Example 6 was obtained by performing treatment as described in Example 11, except that the terminal blocking treatment was not performed. After completion of the hydrolysis treatment, the spun yarns had a small strength retaining rate (Table 2).

(Comparative Example 7)

The woven fabric of Comparative Example 7 was obtained as described in Example 12, except that the terminal blocking treatment was not performed. After completion of the hydrolysis treatment, the strength retaining rate was smaller than that of Example 12 (Table 2).

(Comparative Example 8)

The woven fabric of Comparative Example 8 was obtained by performing treatment as described in Example 13, except that the terminal blocking treatment was not performed. After completion of the hydrolysis treatment, the strength retaining rate was smaller than that of Example 13 (Table 2).

(Comparative Example 9)

The woven fabric of Comparative Example 9 was obtained by performing treatment as described in Example 14, except that terminal blocking treatment was not performed. After completion of the hydrolysis treatment, the strength retaining rate was smaller than that of Example 14 (Table 2).

| Table 1 (Examples) | 1 | 2 | 3 | 4 | 5 | 6 | 7 | 8 | 9 | 11 | 12 | 13 | 14 |
|---|---|---|---|---|---|---|---|---|---|---|---|---|---|
| Terminal carboxyl group concentration (equivalents/$10^3$ | 4 | 4 | 3.9 | 4.1 | 4.4 | 5.4 | 4 | 7 | 5.9 | - | 3.4 | 3 | 3.7 |
| Tensile strength before hydrolysis treatment (cN/dT) | 2.8 | 2.8 | 2.7 | 2.7 | 5.1 | 2.9 | 3 | 3 | 3.1 | 1.4 | 3.1 | 3 | 3.2 |
| Tensile strength after hydrolysis treatment (cN/dT) | 2 | 2.6 | 2.6 | 2.4 | 4.5 | 2.5 | 2 | 3 | 2.8 | 1.3 | 3.1 | 3 | 3.1 |

(continued)

| Table 1 (Examples) | 1 | 2 | 3 | 4 | 5 | 6 | 7 | 8 | 9 | 11 | 12 | 13 | 14 |
|---|---|---|---|---|---|---|---|---|---|---|---|---|---|
| Strength retaining rate (%) | 71 | 93 | 96 | 89 | 88 | 86 | 82 | 97 | 90 | 93 | 100 | 97 | 97 |

| Table 2 (Comparative examples) | 1 | 2 | 3 | 4 | 6 | 7 | 8 | 9 |
|---|---|---|---|---|---|---|---|---|
| Terminal carboxyl group concentration (equivalents/$10^3$ kg) | 29 | 30 | 25 | 28 | - | 3.9 | 4.8 | 5.1 |
| Tensile strength before hydrolysis treatment (cN/dT) | 3.1 | 2.2 | 5 | 2.5 | 1.4 | 2.9 | 2.9 | 3.1 |
| Tensile strength after hydrolysis treatment (cN/dT) | 0 | 0 | 1.5 | 0 | 0.9 | 2.3 | 2.2 | 2.3 |
| Strength retaining rate (%) | 0 | 0 | 30 | 0 | 64 | 79 | 76 | 74 |

| Table 3 | Example 10 | Comparative example 5 |
|---|---|---|
| Tensile strength before hydrolysis treatment (KPa) | 550 | 557 |
| Tensile strength after hydrolysis treatment (KPa) | 572 | 264 |
| Strength retaining rate (%) | 104 | 47 |

**Claims**

1. Polyester-based fibers comprising a terminal blocking agent taken up inside the fibers to block the terminal carboxyl groups, wherein the terminal blocking agent is at least one compound selected from carbodiimide compounds, oxazoline compounds and epoxy compounds, and wherein the fibers comprising the terminal blocking agent are obtainable by immersing polyester-based fibers in a solution containing terminal blocking agent having a particle size of 100pm or less at 80 to 130°C, such that if an outer layer fiber portion obtained by removing the solvent from a solution that has 5 to 10 wt% of the outer layer portion of the fibers dissolved in it is designated N1 and the inner layer fiber portion remaining after hydrolyzing and removing the outer layer fiber portion is designated N2, then the concentration of the terminal blocking agent contained in N1 is larger than the concentration of the terminal blocking agent contained in N2.

2. Polyester-based fibers according to claim 1, wherein said polyester-based fibers contain polylactic acid as a main component.

3. Polyester-based fibers according to claim 1, wherein said polyester-based fibers contain at least one of terephthalic acid and succinic acid as a dicarboxylic acid.

4. A fiber structure comprising cellulose-based fibers together with the polyester-based fibers as set forth in claim 1.

5. A method for producing polyester-based fibers comprising a step of causing a terminal blocking agent to be taken up inside the fibers, for blocking the terminal carboxyl groups, wherein said terminal blocking agent is at least one compound selected from carbodiimide compounds, oxazoline compounds and epoxy compounds, which method comprises supplying the polyester-based fibers into a treatment solution containing the terminal blocking agent at 80 to 130°C at normal pressure or under pressurization, wherein the particle size of the terminal blocking agent is 100pm or less, and processing the fibers in a bath while the treatment solution is circulated.

6. A method for producing polyester-based fibers according to claim 5, wherein the treatment solution containing the terminal blocking agent is supplied to the polyester-based fibers, followed by drying and heat treatment.

7. A method for producing polyester-based fibers according to claim 5 or 6, wherein the polyester-based fibers contain polylactic acid as a main component.

8. A method for producing polyester-based fibers according to claim 5 or 6, wherein the polyester-based fibers contain at least one of terephthalic acid and succinic acid as a dicarboxylic acid.

9. A method for producing polyester-based fibers according to any one of claims 5 to 8, wherein the polyester-based fibers already contain a terminal blocking agent beforehand.

**Patentansprüche**

1. Polyesterbasierte Fasern, umfassend ein terminales Blockiermittel, das innerhalb der Fasern aufgenommen ist, um die terminalen Carboxylgruppen zu blockieren, wobei das terminale Blockiermittel zumindest eine aus Carbodiimidverbindungen, Oxazolinverbindungen und Epoxyverbindungen ausgewählte Verbindung ist und wobei die das terminale Blockiermittel umfassenden Fasern durch Eintauchen von polyesterbasierten Fasern in eine Lösung, die das terminale Blockiermittel mit einer Partikelgröße von 100 $\mu$m oder weniger umfasst, bei 80 bis 130° C erhältlich sind, so dass, wenn ein äußerer Faserschichtanteil, der durch Entfernen des Lösungsmittels aus einer Lösung, die 5 bis 10 Gew.-% des äußeren Schichtanteils der darin gelösten Fasern umfasst, erhalten wird, N1 genannt wird und der innere Faserschichtanteil, der nach Hydrolyse und Entfernung des äußeren Faserschichtanteils zurückbleibt, N2 genannt wird, die in N1 enthaltene Konzentration des terminalen Blockiermittels größer als die in N2 enthaltene Konzentration des terminalen Blockiermittels wird.

2. Polyesterbasierte Fasern nach Anspruch 1, wobei die polyesterbasierten Fasern Polymilchsäure als Hauptkomponente umfassen.

3. Polyesterbasierte Fasern nach Anspruch 1, wobei die polyesterbasierten Fasern zumindest eine von Terephthalsäure und Bernsteinsäure als Dicarbonsäure umfassen.

4. Faserstruktur, umfassend cellulosebasierte Fasern zusammen mit polyesterbasierten Fasern gemäß Anspruch 1.

5. Verfahren zur Herstellung polyesterbasierter Fasern, umfassend einen Schritt des Bewirkens, dass ein terminales Blockiermittel in die Fasern aufgenommen wird, um die terminalen Carboxylgruppen zu blockieren, wobei das terminale Blockiermittel zumindest eine aus Carbodiimidverbindungen, Oxazolinverbindungen und Epoxyverbindungen ausgewählte Verbindung ist, wobei das Verfahren das Zuführen der polyesterbasierten Fasern zu einer Behandlungslösung, die das terminale Blockiermittel umfasst, bei 80 bis 130° C bei Normaldruck oder unter Druckbeaufschlagung, wobei die Partikelgröße des terminalen Blockiermittels 100 $\mu$m oder weniger beträgt, sowie das Verarbeiten der Fasern in einem Bad, während die Behandlungslösung zirkuliert wird, umfasst.

6. Verfahren zur Herstellung von polyesterbasierten Fasern nach Anspruch 5, wobei die Behandlungslösung, die das terminale Blockiermittel umfasst, zu den polyesterbasierten Fasern zugesetzt wird, gefolgt von Trocknung und Wärmebehandlung.

7. Verfahren zur Herstellung von polyesterbasierten Fasern nach Anspruch 5 oder 6, wobei die polyesterbasierten Fasern Polymilchsäure als Hauptkomponente umfassen.

8. Verfahren zur Herstellung von polyesterbasierten Fasern nach Anspruch 5 oder 6, wobei die polyesterbasierten Fasern zumindest eine von Terephthalsäure und Bernsteinsäure als Dicarbonsäure umfassen.

9. Verfahren zur Herstellung von polyesterbasierten Fasern nach einem der Ansprüche 5 bis 8, wobei die polyesterbasierten Fasern bereits im Vorhinein ein terminales Blockiermittel umfassen.

**Revendications**

1. Fibres à base de polyester comprenant un agent de blocage terminal incorporé à l'intérieur des fibres pour bloquer les groupes carboxyle terminaux, dans lesquelles l'agent de blocage terminal est au moins un composé choisi parmi des composés de carbodiimide, des composés d'oxazoline et des composés d'époxy, et les fibres comprenant l'agent de blocage terminal pouvant être obtenues par immersion de fibres à base de polyester dans une solution contenant un agent de blocage terminal ayant une taille de particule de 100 $\mu$m ou moins à 80 à 130 °C, de sorte que, si une partie de fibres de couche externe obtenue par élimination du solvant à partir d'une solution qui comporte 5 à 10 % en poids de la partie de couche externe des fibres dissoute dans celle-ci est désignée par N1 et la partie de fibres de couche interne restant après l'hydrolyse et le retrait de la partie de fibres de couche externe est désignée par N2, alors la concentration de l'agent de blocage terminal contenue dans N1 est supérieure à la concentration de l'agent de blocage terminal contenue dans N2.

2. Fibres à base de polyester selon la revendication 1, lesdites fibres à base de polyester contenant du poly(acide lactique) en tant que composant principal.

3. Fibres à base de polyester selon la revendication 1, lesdites fibres à base de polyester contenant au moins l'un de l'acide téréphtalique et l'acide succinique sous la forme d'un acide dicarboxylique.

4. Structure de fibres comprenant des fibres à base de cellulose conjointement avec les fibres à base de polyester selon la revendication 1.

5. Procédé de production de fibres à base de polyester comprenant une étape consistant à amener un agent de blocage terminal à être incorporé à l'intérieur des fibres, pour bloquer les groupes carboxyle terminaux, dans lequel ledit agent de blocage terminal est au moins un composé choisi parmi des composés de carbodiimide, des composés d'oxazoline et des composés d'époxy, ledit procédé comprenant l'alimentation des fibres à base de polyester dans une solution de traitement contenant l'agent de blocage terminal à 80 à 130 °C à pression normale ou sous pression, dans lequel la taille de particule de l'agent de blocage terminal est de 100 $\mu$m ou moins, et le traitement des fibres dans un bain tandis que la solution de traitement est mise en circulation.

6. Procédé de production de fibres à base de polyester selon la revendication 5, dans lequel la solution de traitement contenant l'agent de blocage terminal est ajoutée aux fibres à base de polyester, suivie par un séchage et un traitement thermique.

7. Procédé de production de fibres à base de polyester selon la revendication 5 ou 6, dans lequel les fibres à base de polyester contiennent du poly(acide lactique) en tant que composant principal.

8. Procédé de production de fibres à base de polyester selon la revendication 5 ou 6, dans lequel les fibres à base de polyester contiennent au moins l'un parmi l'acide téréphtalique et l'acide succinique en tant qu'acide dicarboxylique.

9. Procédé de production de fibres à base de polyester selon l'une quelconque des revendications 5 à 8, dans lequel les fibres à base de polyester contiennent déjà un agent de blocage terminal au préalable.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001261797 A
- JP 2002030208 A
- JP 2005226183 A

- JP 11080522 A
- US 3867181 A